# EUROPEAN PATENT APPLICATION

(11) **EP 4 321 570 A1**
(43) Date of publication of application: **14.02.2024**
(21) Application number: 22784585.6
(22) Date of filing: 29.03.2022
(51) Int. Cl.: C08K 5/01, C08L 83/05, C08L 83/07

(54) **ADDITION-REACTION-CURABLE ORGANOPOLYSILOXANE COMPOSITION**

(30) Priority: 09.04.2021 JP 2021066624
(71) Applicant: SHIN-ETSU CHEMICAL CO., LTD., Tokyo 1000005 (JP)
(72) Inventor: IHARA, Toshiaki, Annaka-shi, Gunma 379-0224 (JP)
(74) Representative: Mewburn Ellis LLP
(86) International application number: PCT/JP2022/015563
(87) International publication number: WO 2022/215601

(57) **Abstract**

Provided is an addition-reaction-curable organopolysiloxane composition comprising
(A) an organopolysiloxane having at least two silicon-atom-binding alkenyl groups per molecule,
(B) an organohydrogenpolysiloxane having at least two silicon-atom-binding hydrogen atoms (Si-H groups) per molecule,
(C) an organopolysiloxane having at least one (meth)acryl group per molecule,
(D) a linear olefin having a melting point of 20°C or lower and a flash point of 40°C or higher, and
(E) a platinum-group metal-based catalyst, in which the amount of a metal other than a platinum-group metal is 100 ppm or less,
the addition-reaction-curable organopolysiloxane composition can be cured satisfactorily and exhibits satisfactory adhesiveness even when the amount of the platinum-group metal-based catalyst is small, and an acryl-group-containing silicone cannot be precipitated and separated over time. Therefore, the addition-reaction-curable organopolysiloxane composition can be formed into a releasing coating film for a silicone rubber, release paper or a release film stably under a small platinum-group metal-based catalyst amount.

## Description

### TECHNICAL FIELD

This invention relates to an addition reaction curable organopolysiloxane composition which is curable with a minor amount of platinum group metal catalyst.

### BACKGROUND ART

In the prior art approach for preventing adhesion or bond between sheet-like substrates such as paper and plastic sheets and pressure-sensitive adhesives, a cured film of an organopolysiloxane composition is disposed on the substrate surface to impart release properties. The following methods of Patent Documents 1 to 3 are known for forming a cured organopolysiloxane film on the substrate surface.
(1) method for forming a releasable film through addition reaction between an alkenyl-containing organopolysiloxane and an organohydrogenpolysiloxane in the presence of a platinum group metal-based compound as a catalyst (Patent Document 1: JP-A S47-032072).
(2) method for forming a releasable film through condensation reaction of an organopolysiloxane having a functionality such as hydroxy or alkoxy in the presence of an organometallic salt as a catalyst (Patent Document 2: JP-B S35-013709).
(3) method for forming a releasable film by effecting radical polymerization of an acryloyl group-containing organopolysiloxane using a photoinitiator and UV or electron beam (Patent Document 3: JP-A S54-162787).

Among the above methods (1), (2) and (3), method (1) for forming a releasable film through addition reaction in the presence of a platinum catalyst is widely utilized because of effective cure and because it can accommodate a variety of requisite release properties covering from low-speed release to high-speed release.

In the prior art, the platinum group metal-based catalyst is often used in a concentration of 60 to 400 ppm by weight of platinum group metal based on the release paper or film-forming organopolysiloxane composition. The reason is that if the platinum concentration is less than 60 ppm, cure reaction does not take place to a full extent so that the cured film becomes soft, and the amount of residual Si-H groups becomes more so that the release force becomes high. In addition, one component, organopolysiloxane remains unreacted and becomes a migrating component so that the organopolysiloxane migrates to the pressure-sensitive adhesive surface to be attached to the release paper, to incur a drop of adhesive force.

Further, the platinum catalyst is expensive because it is a noble metal which is rare on the earth. The platinum catalyst accounts for a large proportion in the manufacture cost of release paper or release film. Therefore, reducing the amount of platinum group metal-based catalyst leads to a lower price. In addition, some substrates contain substances which can poison the platinum group metal-based catalysts, such as nitrogen, sulfur and phosphorus compounds. This raises a problem that the catalyst poison bonds to the platinum group metal to inhibit the progress of cure via addition reaction.

The method of promoting cure with a minor amount of the platinum group metal-based catalyst is known from Patent Documents 4 and 5 which describe the following compositions.
(4) a silicone composition comprising an organopolysiloxane having at least two silicon-bonded alkenyl groups per molecule, a hydrogenated organopolysiloxane having SiH groups at an end and side chain, a MD^{Vi}Q resin as an adhesion-modifying agent, and a hydrosilylation inhibitor, wherein M is R₃SiO_{1/2}, D^{Vi} is RPSiO_{2/2}, Q is SiO_{4/2}, R is each independently a C₁-C₁₂ substituted or unsubstituted, monovalent hydrocarbon group free of aliphatic unsaturation, and P is an alkenyl group: -(CH₂)ₙ-CH=CH₂ wherein n is an integer of 0 to 6 (see Patent Document 4: JP 4221300).
(5) a releasable coating composition comprising an alkenyl-functionalized polysiloxane, a silicon hydride-functionalized polysiloxane, and a platinum group metal, the alkenyl-functionalized polysiloxane being prepared using a phosphazene base catalyst (see Patent Document 5: JP-A 2009-513740).

The compositions of Patent Documents 4 and 5, however, exhibit unsatisfactory cure behavior as discussed below.

For example, the composition of Patent Document 4 is characterized by the use of highly reactive terminal Si-H groups and film-forming MD^{Vi}Q resin. In Examples, the composition is cured in a platinum concentration of 60 ppm by heating at 150°C for 1.8 seconds. It is described nowhere how to cure in an amount of less than 60 ppm of platinum. A cured film obtained in a platinum concentration of 60 ppm has an extraction value (i.e., content of unreacted siloxane) which is as large as 5.8 to 6.5%, indicating the presence of more uncured siloxane, that is, undercure. Release properties are described nowhere in Patent Document 4.

The composition of Patent Document 5 is characterized by the alkenyl-functionalized polysiloxane which is a branched siloxane having MDQ units. It is described that the probability of forming a crosslinked film is increased by a branched chain having a terminal vinyl group. In Example of Patent Document 5, tetradimethylvinylsiloxysilane is reacted in the presence of a phosphazene catalyst to synthesize an alkenyl-containing branched siloxane. Then a silicon hydride-functionalized polysiloxane and a platinum catalyst are blended in a concentration of 40 ppm of platinum. The composition is cured under conditions: 100°C and 15 seconds and 115°C and 20 seconds. In Patent Document 5, the cured state of the composition is evaluated by extracting the cured product with methyl isobutyl ketone. Amounts of unreacted siloxane extracted are as large as 6.4 to 25.2%, indicating undercure. Release and other properties are evaluated nowhere.

For the films having undergone a full extent of cure, it is generally recommended that the content of unreacted siloxane extracted is 5% or less, especially 3% or less. If the cured film contains 5% or more of unreacted siloxane as in Patent Documents 4 and 5, the siloxane migrates to the surface of a pressure-sensitive adhesive in contact with the release film, leading to a substantial drop of residual adhesion rate. Since more residual Si-H groups are left, the release force becomes high as compared with the fully cured state.

Making further investigations, the inventor discovered in Patent Document 6 that when an organopolysiloxane compound containing at least three (meth)acryloyl groups per molecule and having a weight average molecular weight of at least 1,000 is blended in an addition reaction type silicone composition for release paper, addition reaction can take place with a minor amount of a platinum group metal-based catalyst, and a cured film requiring a release force equivalent to that in the prior art can be formed.

### PRIOR ART DOCUMENTS

### PATENT DOCUMENTS

Patent Document 1: JP-A S47-32072
Patent Document 2: JP-B S35-13709
Patent Document 3: JP-A S54-162787
Patent Document 4: JP 4221300
Patent Document 5: JP-A 2009-513740
Patent Document 6: WO 2020/004254

### SUMMARY OF INVENTION

### TECHNICAL PROBLEM

Surely the composition of Patent Document 6 is fully curable even in a platinum amount which is as small as 15 ppm or 20 ppm, with a less amount of uncured silicone being left behind. Since the acryloyl-containing organopolysiloxane is incompatible with other siloxanes (e.g., alkenyl-containing organopolysiloxane and organohydrogenpolysiloxane), the composition remains white cloudy in the mixing step, and the acryloyl-containing organopolysiloxane precipitates with the lapse of time and settles down or separates out after 10 to 60 minutes of static standing. The cure with a minor amount of a platinum group metal-based catalyst is insufficient unless the lower layer is properly agitated.

It is also found that the formulation of Patent Document 6 with a minor amount of a platinum group metal-based catalyst is strongly affected by metal salts such as sodium and potassium salts. When the content of metal salts in the composition is noticeable, addition reaction does proceed no longer.

An object of the invention, which has been made under the above-mentioned circumstances, is to provide an addition reaction curable organopolysiloxane composition which cures to a full extent even with a minor amount of a platinum group metal-based catalyst to form a cured film having satisfactory adhesion and requiring a release force equivalent to that in the prior art, and which can form a release film (for silicone rubber, release paper or release film) in a stable manner with a minor amount of platinum group metal-based catalyst because the acryloyl-containing silicone does not settle down or separate out with the lapse of time.

### SOLUTION TO PROBLEM

The inventor studied a variety of compatibilizers for preventing separation. In most cases, when compatibilization is possible, cure reaction with a minor amount of platinum group metal-based catalyst does not take place. Quite unexpectedly, the inventor has found that when a linear olefin having a melting point of up to 20°C and a flash point of at least 40°C is blended, both compatibilization and cure reaction with a minor amount of platinum group metal-based catalyst are possible. Since the cure reaction with a minor amount of platinum group metal-based catalyst does not proceed if the composition contains a noticeable amount of metal salts, it is effective to suppress the content of metals other than the platinum group metal in the composition to 100 ppm or less. The invention is predicated on these findings.

Accordingly, the invention provides an addition reaction curable organopolysiloxane composition, which is sometimes referred to as organopolysiloxane composition or simply composition, as defined below.
1. An addition reaction curable organopolysiloxane composition comprising the following components (A) to (E):
   (A) 100 parts by weight of an organopolysiloxane having on the average at least two silicon-bonded alkenyl groups per molecule,
   (B) an organohydrogenpolysiloxane having on the average at least two silicon-bonded hydrogen atoms (or Si-H groups) per molecule, in an amount to give 1 to 5 moles of Si-H groups per mole of alkenyl groups in component (A),
   (C) 0.01 to 10 parts by weight of an organopolysiloxane having on the average at least one (meth)acryloyl group per molecule, exclusive of the organopolysiloxane (A),
   (D) 0.1 to 20 parts by weight of a linear olefin having a melting point of up to 20°C and a flash point of at least 40°C, and
   (E) a platinum group metal-based catalyst in an amount to give 1 to 50 ppm by weight of platinum group metal based on the total weight of components (A), (B), (C) and (D),
   the content of metals other than the platinum group metal being up to 100 ppm in the composition.
2. The addition reaction curable organopolysiloxane composition of 1, further comprising (F) an addition reaction inhibitor in an amount of 0.01 to 5 parts by weight per 100 parts by weight of component (A).
3. The addition reaction curable organopolysiloxane composition of 1 or 2 wherein component (C) has a weight average molecular weight of 516 to 100,000.
4. The addition reaction curable organopolysiloxane composition of any one of 1 to 3 wherein component (C) is an organopolysiloxane having a (meth)acryloyl group on its side chain.
5. The addition reaction curable organopolysiloxane composition of any one of 1 to 4 wherein component (C) is a cyclic siloxane having a (meth)acryloyl group.
6. The addition reaction curable organopolysiloxane composition of any one of 1 to 5 wherein component (C) is an organopolysiloxane having at least three (meth)acryloyl groups per molecule.
7. The addition reaction curable organopolysiloxane composition of any one of 1 to 6 wherein component (D) is a linear olefin having a vinyl value (i.e., moles of unsaturated functional group in 100 g) of 0.30 to 0.58 mol/100 g, a melting point of up to 20°C, and a flash point of at least 70°C, and containing at least one unsaturated functional group at an end of its molecule.
8. The addition reaction curable organopolysiloxane composition of any one of 1 to 7, for use in release paper or release film.

### ADVANTAGEOUS EFFECTS OF INVENTION

The organopolysiloxane composition cures to a full extent even with a minor amount of a platinum group metal-based catalyst to form a cured film requiring a release force equivalent to that of prior art addition reaction curable organopolysiloxane compositions. Since the amount of platinum group metal-based catalyst is small, the manufacture cost of the composition can be significantly reduced. The composition is curable through addition reaction even on a catalyst poison-containing substrate.

### DESCRIPTION OF EMBODIMENTS

Now the invention is described in detail.

### [Component (A)]

Component (A) is an organopolysiloxane having on the average at least two silicon-bonded alkenyl groups per molecule, which may be used alone or in combination of two or more. Typical of component (A) is an organopolysiloxane having a structure of the following average compositional formula (1).

MₐM^{vi}_{b}D_{c}D^{vi}_{d}TₑT^{vi}_{f}Q_{g} (1)

Herein M is R₃SiO_{1/2}, M^{vi} is R₂PSiO_{/12}, D is R₂SiO_{2/2}, D^{vi} is RPSiO_{2/2}, T is RSiO_{3/2}, T^{vi} is PSiO_{3/2}, Q is SiO_{4/2}, R is each independently a C₁-C₁₂ substituted or unsubstituted monovalent hydrocarbon group free of aliphatic unsaturation, P is an alkenyl group of the formula: -(CH₂)ₕ-CH=CH₂ wherein h is an integer of 0 to 6, a, b, d and f are each independently 0 or a positive number, not all b, d and f are 0 at the same time, 2 ≤ b+d+f ≤ 500, c is a positive number of 10 to 27,000, e is 0 or a positive number of up to 200, and g is 0 or a positive number of up to 100.

In formula (1), R is each independently a substituted or unsubstituted monovalent hydrocarbon group of 1 to 12 carbon atoms, preferably 1 to 10 carbon atoms, more preferably 1 to 8 carbon atoms, free of aliphatic unsaturation. Examples include alkyl groups such as methyl, ethyl, propyl, butyl, pentyl, hexyl, octyl, decyl and dodecyl, cycloalkyl groups such as cyclohexyl, aryl groups such as phenyl, naphthyl and tolyl, aralkyl groups such as benzyl and phenethyl, and substituted forms of the foregoing in which some carbon-bonded hydrogen atoms are substituted by halogen atoms, epoxy, amino, polyether, cyano or hydroxy groups. Among others, methyl preferably accounts for at least 80 mol% of the overall R from the aspects of keeping the composition curable and reducing the release force of the cured product.

P is an alkenyl group of the formula: -(CH₂)ₕ-CH=CH₂ wherein h is an integer of 0 to 6, examples of which include vinyl, allyl, butenyl, propenyl, 5-hexenyl, octenyl, and decenyl, with vinyl being preferred.

In formula (1), a, b, d and f are each independently 0 or a positive number, b, d and f are not equal to 0 at the same time, 2 ≤ b+d+f ≤ 500, preferably 2 ≤ b+d+f ≤ 200. The subscript "a" is preferably 0 or a positive number of up to 100, b is preferably 0 or a positive number of up to 100, d is preferably 0 or a positive number of up to 500, and f is preferably 0 or a positive number of up to 100.

Also, c is a positive number of 10 to 2,700, preferably 10 to 2,000, more preferably 50 to 1,500. If c is less than 10, a more amount of mist is generated when the coating speed exceeds 200 m/min with the risk that the coating surface of the organopolysiloxane composition is roughened. If c exceeds 27,000, the organopolysiloxane composition has too high a kinematic viscosity and becomes inefficient to coat so that the coating may be aggravated in flatness and the coating weight largely vary locally on the surface.

Also, e is 0 or a positive number of up to 200, preferably 0 or a positive number of up to 20, more preferably 0 or a positive number of up to 10, and g is 0 or a positive number of up to 1,000, preferably 0 or a positive number of up to 10, more preferably 0 or a positive number of up to 5.

Component (A) should preferably have a vinyl value of 0.001 to 0.7 mol/100 g, more preferably 0.005 to 0.5 mol/100 g, and even more preferably 0.01 to 0.1 mol/100 g. If the vinyl value is less than 0.001 mol/100 g, less reaction sites may be available, leading to a cure failure. If the vinyl value exceeds 0.7 mol/100 g, the crosslinking density may become too high, and the low-speed release force become high.

Component (A) preferably has a weight average molecular weight (Mw) of from 800 to 200,000, more preferably from 800 to 150,000, even more preferably from 1,500 to 100,000. If the Mw of component (A) is less than 800, it is more wettable and spreadable, but there is a risk that the coating weight on the substrate becomes insufficient. If the Mw exceeds 200,000, it is less wettable and spreadable, and there is a risk that the coating weight on the substrate widely varies. As used herein, the Mw of component (A) is measured by gel permeation chromatography (GPC) versus polystyrene standards using toluene solvent.

Component (A) preferably has a viscosity at 25°C of from 7 mm²/s to 3,000,000 mm²/s, more preferably from 10 mm²/s to 10,000 mm²/s, even more preferably from 20 mm²/s to 5,000 mm²/s. If the kinematic viscosity is less than 7 mm²/s, the overall composition has a low kinematic viscosity with a risk that the coating weight becomes insufficient. As used herein, the kinematic viscosity is determined by measuring the absolute viscosity according to the EMS method and computing on the basis of the specific gravity. For example, EMS viscometer (EMS-1000S by Kyoto Electronics Manufacturing Co., Ltd.) is used.

Illustrative examples of component (A) include polysiloxanes containing alkenyl groups at both ends, polysiloxanes containing alkenyl groups on side chains, polysiloxanes containing alkenyl groups at one end and on side chain, polysiloxanes containing alkenyl groups at both ends and on side chains, and branched polysiloxanes containing alkenyl groups at ends.

Examples as expressed by structural formula include M^{vi}₂D_{c}, M₂D_{c}D^{vi}_{d}, M^{vi}₃D_{c}T₁, M^{vi}₄D_{c}T₂, M^{vi}₂D_{c}D^{vi}_{d}, M^{vi}₂D_{c}Q₁, and MₐD_{c}D^{vi}_{d}T^{vi}_{f} wherein M, M^{vi}, D, D^{vi}, T, T^{vi}, Q, a, c, d, and f are as defined above (the same hereinafter). Illustrative structures include M^{vi}₂D₁₅₅, M^{vi}₂D₁₀₀, M₂D₉₇D^{vi}₃, M₂D₂₆D^{vi}₄, M₂D₉₆D^{vi}₄, M₂D₉₅D^{vi}₅, M^{vi}₃D₁₀₀T₁, M^{vi}₄D₁₀₀T₂, M^{vi}₂D₉₇D^{vi}_{1,} M^{vi}₂D₉₅D^{vi}₃, M₃D₉₃D^{vi}₃T^{vi}₁, M^{Vi}₂D₂₀₀₀, and M₂D₁₀₀₀D^{Vi}₂₀.

### [Component (B)]

Component (B) is an organohydrogenpolysiloxane containing on the average at least two silicon-bonded hydrogen atoms (i.e., Si-H groups) per molecule, which may be used alone or in combination of two or more. The number of silicon-bonded hydrogen atoms (i.e., Si-H groups) per molecule is preferably 3 to 100, more preferably 10 to 100. An addition reaction takes place between Si-H groups on the organohydrogenpolysiloxane and alkenyl groups on component (A) to form a crosslinked organopolysiloxane. The content of Si-H groups is preferably 0.001 to 3.5 mol/100 g, more preferably 0.01 to 2.5 mol/100 g, even more preferably 0.02 to 2.0 mol/100 g. A less Si-H content may adversely affect curability and adhesion whereas an excessive Si-H content may cause a tightening of release force.

The organohydrogenpolysiloxane as component (B) preferably has a structure of the following formula (2).

MᵢM^{H}ⱼDₖD^{H}_{L}TₘT^{H}ₙQₒ (2)

Herein M is R₃SiO_{1/2}, M^{H} is R₂HSiO_{1/2}, D is R₂SiO_{2/2}, D^{H} is RHSiO_{2/2}, T is RSiO_{3/2}, T^{H} is HSiO_{3/2}, Q is SiO_{4/2}, R is each independently a C₁-C₁₂ substituted or unsubstituted monovalent hydrocarbon group free of aliphatic unsaturation, i, j, k and m are each independently 0 or a positive number, L is 0 or a positive number of up to 100, n is 0 or a positive number of up to 10, o is 0 or a positive number of up to 10, j, L and n are not equal to 0 at the same time, and 2 ≤ j+L+n ≤ 100.

In formula (2), R is as exemplified above for R in formula (1), with C₁-C₈ alkyl groups being preferred.

In formula (2), i, j, k and m are each independently 0 or a positive number, i is preferably 0 or a positive number of up to 10, j is preferably 0 or a positive number of up to 10, k is preferably 0 or a positive number of up to 100, and m is preferably 0 or a positive number of up to 10. Also, L is 0 or a positive number of up to 100, preferably 2 to 100, and more preferably 10 to 80, n is 0 or a positive number of up to 10, preferably 0 or a positive number of up to 5, m is 0 or a positive number of up to 10, preferably 0 or a positive number of up to 5, j, L and n are not equal to 0 at the same time, j+L+n is a positive number of 2 to 100, preferably 10 to 80, and o is 0 or a positive number of up to 10, preferably 0 or a positive number of up to 5.

Illustrative examples of the organohydrogenpolysiloxane as component (B) include polysiloxanes containing hydrogensilyl groups at both ends, polysiloxanes containing hydrogensilyl groups on side chains, polysiloxanes containing hydrogensilyl groups at one end and on side chain, and polysiloxanes containing hydrogensilyl groups at both ends and on side chains.

Examples as expressed by structural formula include M^{H}₂Dₖ, M₂D^{H}_{L}, M₂DₖD^{H}_{L}, M^{H}₂DₖD^{H}_{L}, M^{H}₃DₖT₁, M^{H}₄DₖT₂, and MᵢDₖD^{H}_{L}T^{H}ₙ wherein M, M^{H}, D, D^{H}, T, T^{H}, i, k, L, and n are as defined above (the same, hereinafter). Illustrative structures include M^{H}₂D₁₀, M^{H}₂D₁₀₀, M₂D₂₇D^{H}₃, M₂D₉₇D^{H}₃, M₂D₂₆D^{H}₄, M₂D₂₅D^{H}₅, M₂D₂₄D^{H}₆, M₂D₉₆D^{H}₄, M₂D₉₅D^{H}₅, M^{H}₃D₁₀₀T₁, M^{H}₄D₁₀₀T₂, M^{H}₂D₉₇D^{H}₁, M₂D₃₀D^{H}₅Q₁, M^{H}₂D₉₅D^{H}₃, and M₃D₉₃D^{H}₃T^{H}₁.

Component (B) preferably has a weight average molecular weight (Mw) of 194 to 10,000, more preferably 874 to 5,000. If the Mw of component (B) is too low, the adhesion can be markedly aggravated. If the Mw is too high, sometimes reactivity becomes poor, and curability becomes low, resulting in a reduction of residual adhesion rate or an increase of release force due to undercure. As used herein, the Mw of component (B) is measured by gel permeation chromatography (GPC) versus polystyrene standards using toluene solvent.

Component (B) should preferably have a kinematic viscosity at 25°C of 2 to 500 mm²/s, more preferably 2 to 300 mm²/s, even more preferably 5 to 200 mm²/s. If the kinematic viscosity at 25°C is less than 2 mm²/s, the adhesion to substrates can be aggravated despite good reactivity due to a low molecular weight. If the kinematic viscosity exceeds 500 mm²/s, sometimes reactivity becomes poor, and curability becomes low, resulting in a reduction of residual adhesion rate or an increase of release force due to undercure. Notably, the kinematic viscosity is determined as above by measuring the absolute viscosity according to the EMS method and computing on the basis of a specific gravity.

The amount of component (B) blended is such that the moles of Si-H groups is 1 to 5 times, preferably 1.2 to 3 times the moles of alkenyl groups in component (A). The amount of 1 to 5 times corresponds to 0.016 to 3.5 mol/100 g calculated as Si-H functional groups. If component (B) is too less, curability and adhesion sometimes become insufficient. If component (B) is too much, there is a risk that the amount of residual Si-H groups becomes more so that the release force becomes high, and the amount of Si-H groups decreases with time so that the release force lowers with time.

### [Component (C)]

Component (C) is an organopolysiloxane having on the average at least one (meth)acryloyl group per molecule, exclusive of component (A), which may be used alone or in combination of two or more. Component (C) preferably has a weight average molecular weight (Mw) of 516 to 100,000, more preferably 516 to 30,000. Further preferably component (C) is free of aliphatic unsaturation. The (meth)acryloyl group is intended to mean acryloyl and methacryloyl groups, with acryloyl being preferred.

Typical of the organopolysiloxane are cyclic siloxanes having a structure of the following formulae (3) and (4) and organopolysiloxanes having a structure of the following structural formula (5). Organopolysiloxanes having a molecular weight or weight average molecular weight of 516 to 5,000 are preferred. Organopolysiloxanes having 3 to 10 siloxane units having a (meth)acryloyl group are preferred and organopolysiloxanes free of a Si-H group and alkenyl group are also preferred. Organopolysiloxanes having a (meth)acryloyl group on their side chain are preferred as component (C). Inter alia, cyclic siloxanes having a (meth)acryloyl group are more preferred. In formulae (3) to (5), R is as exemplified above for R in formula (1), with C₁-C₈ alkyl groups being preferred.

D^{Ac}_{q} (3)

Herein D^{Ac} is AcRSiO_{2/2} wherein R is each independently a C₁-C₁₂ substituted or unsubstituted monovalent hydrocarbon group free of aliphatic unsaturation and Ac is CH₂=CR³COOR⁴ wherein R³ is hydrogen, a C₁-C₂₀ alkyl group or aryl group, and R⁴ is a C₁-C₆ alkyl group which may have a branched or cyclic structure and may contain an epoxy moiety, ester bond, urethane bond, ether bond, isocyanate bond or hydroxy moiety; and q is 3 to 10.

D^{Ac}ᵣDs (4)

Herein D^{Ac} is as defined above, D is R₂SiO_{2/2} wherein R is each independently a C₁-C₁₂ substituted or unsubstituted monovalent hydrocarbon group free of aliphatic unsaturation, r is a number of 3 to 10, and s is a number of 1 to 10.

M^{Ac}ₜMᵤD^{Ac}ᵥD_{w}T^{Ac}ₓT_{y}Q_{z} (5)

Herein M is R₃SiO_{1/2}, D is R₂SiO_{2/2}, T is RSiO_{3/2}, Q is SiO_{4/2}, wherein R is each independently a C₁-C₁₂ substituted or unsubstituted monovalent hydrocarbon group free of aliphatic unsaturation,
M^{Ac} is AcR₂SiO_{1/2},
D^{Ac} is AcRSiO_{2/2}, and
T^{Ac} is AcSiO_{3/2},

Ac is CH₂=CR³COOR⁴ wherein R³ is hydrogen, a C₁-C₂₀ alkyl group or aryl group, and R⁴ is a C₁-C₆ alkyl group which may have a branched or cyclic structure and may contain an epoxy moiety, ester bond, urethane bond, ether bond, isocyanate bond or hydroxy moiety; t is an integer of 0 to 4, u is an integer of 0 to 7, t is an integer of 2 to 4 in case of u=0, t is an integer of 1 to 4 in case of u=1, v is an integer of 3 to 50, w is an integer of 3 to 200, x and y each are an integer of 0 to 10, and z is 0 or 1.

In formula (5), t is an integer of 0 to 4, u is an integer of 0 to 7, t is an integer of 2 to 4 in case of u=0, t is an integer of 1 to 4 in case of u=1. Preferably u is 2 or 3, with t=0 being preferred.

The subscript w is an integer of 3 to 200, preferably 5 to 180, more preferably 10 to 160.

The subscript v is an integer of 3 to 50, preferably 3 to 40, more preferably 5 to 30. If v is less than 3, a reduction of the catalyst amount sometimes entails a loss of cure. A value of v in excess of 50 sometimes entails a loss of cure.

The subscripts x and y each are an integer of 0 to 8, preferably 0 to 6, more preferably 0 to 3. A value of y in excess of 8 sometimes entails a loss of cure for unknown reasons.

The subscript z is 0 or 1. A value of z in excess of 1 is undesirable because of an extremely high viscosity and greater release force.

Examples of the organopolysiloxane compound containing at least 3 (meth)acryloyl groups and having a molecular weight of at least 1,000 include
M₂D₅D^{Ac}₃, M₂D₂₀D^{Ac}₅, M^{Vi}₂D₂₀D^{Ac}₅, M₂D₃₀D^{Ac}₇, M^{φ}₂D²₃₀D^{Ac}₇, M₂D₂₅D^{Ac}₇, M₂D₆₅D^{Ac}₁₅, M₂D²₆₅D^{Ac}₁₅, M₂D₆₁D^{Ac}₁₅, M₁M^{Ac}₁D₁₀D^{Ac}₃, M₃D₂₀D^{Ac}₅T₁, M₃D₁₁₀D^{Ac}₆T₁, M₂D₁₇₀D^{Ac}₂₂, and M₂D₁₇₀D^{Ac}₂₀Q₁.

Herein M^{φ} is (Ph)R₂SiO_{1/2} and (Ph) stands for phenyl.

The amount of component (C) blended is 0.01 to 10 parts by weight, preferably 0.1 to 5 parts by weight per 100 parts by weight of component (A). An amount of less than 0.01 part by weight provides an indefinite cure-promoting effect whereas an amount in excess of 10 parts by weight indicates more migrating component, leading to a drop of residual adhesion rate and aggravation of adhesion.

The method of preparing component (C) involves the steps of combining raw materials such as M₂, M₂D₃, D^{Ac}₄ and D₄, achieving equilibration with the aid of an acid or alkali catalyst, and drying under reduced pressure. Preferably, an antioxidant is added. Strong acids such as trifluoromethanesulfonic acid are preferably used as the catalyst.

The molecular weight or weight average molecular weight of component (C) is measured by Si-NMR spectroscopy. Exemplary of the Si-NMR system used herein is Win Lambda by JEOL Ltd. The measurement method includes placing 1.5 g of a sample and 3.5 g of d-chloroform in a Teflon^{®} sample tube with diameter 10 mm, thoroughly shaking the tube, setting the tube in the Si-NMR system, and measuring at an accumulation number of 600 repeats. It is noted herein that the organopolysiloxane (C-2) having the structure of formula (5) has a weight average molecular weight while other organopolysiloxanes have a molecular weight.

### [Component (D)]

Component (D) is a compatibilizer for helping dissolve component (C) in components (A) and (B), which is a linear olefin having a melting point of up to 20°C and a flash point of at least 40°C. Examples thereof include 1-decene, 1-undecene, 1-dodecene, 1-tridecene, 1-tetradecene, 1-pentadecene, 1-hexadecene, 1-heptadecene, 1-octadecene, decane, undecane, dodecane, tridecane, tetradecane, pentadecane, and hexadecane. Of these, linear olefins having at least one unsaturated functional group at a molecular end are preferred. Inter alia, linear olefins having having a vinyl value (that is, moles of unsaturated functional group in 100 g) of 0.30 to 0.58 mol/100 g, a melting point of up to 20°C and a flash point of at least 70°C and containing at least one unsaturated functional group at a molecular end are more preferred, for example, 1-octadecene, 1-hexadecene and 1-tetradecene.

Referring to the melting point analysis, the melting point is measured by using a differential scanning calorimeter (e.g., DSC-3 by METTLER TOLEDO) and heating in the range of -150°C to 100°C at a rate of 10°C/min. Referring to the flash point analysis, the flash point is measured by the Seta closed-cup flash point analysis method of JIS K 2265-2 over the range of -20°C to 300°C. For those samples having a flash point of 79°C or higher as measured by the Seta closed-cup flash point analysis method, the flash point is measured by the Cleveland open-cup flash point analysis method of JIS K 2265 over the range from 10°C to 250°C.

By blending a specific amount of component (D), the acryloyl group-containing organopolysiloxane as component (C) and components (A) and (B) can be made compatible so that the acryloyl-containing organopolysiloxane may be coordinated to the platinum catalyst without precipitation. It is then expected that the catalytic activity is enhanced such that curing reaction may take place with a minor amount of the platinum group metal-based catalyst. On use of other compatibilizing compounds, curability is often reduced despite possible compatibilization. Component (D) used herein avoids any loss of curability. Although the mechanism is not well understood, it is believed that cure is promoted by the thermal energy generated by the reaction of unsaturated functional groups with SiH groups. On the other hand, if the vinyl value exceeds 0.58 mol/100 g, the H/Vi ratio in the composition is sometimes less than 1, leading to a loss of curability.

If the melting point exceeds 20°C, the composition becomes white cloudy or solidifies at a temperature which is lower than the melting point of component (D) blended therein. Since the compatibilizer effect is lost at this point, component (C) precipitates and separates with the lapse of time. The flash point is 40°C or higher. The reason is that since the flash point of the overall composition is equal to the flash point of component (D) blended therein, the composition is assigned to the hazardous rating of Class 4, 1st Petroleum Group if the flash point of component (D) is lower than 40°C.

### [Component (E)]

As the platinum group metal-based catalyst (E), any well-known addition reaction catalysts may be used. Such platinum group metal-based catalysts include, for example, platinum, palladium, rhodium and ruthenium-based catalysts, with the platinum-based catalysts being preferred. Examples of the platinum-based catalyst include platinum base compounds, complexes of platinum with vinylsiloxanes, alcohol or aldehyde solutions of chloroplatinic acid, complexes of chloroplatinic acid with olefins, and complexes of chloroplatinic acid with vinylsiloxanes.

In prior art organopolysiloxane compositions for release paper or film, the concentration of platinum group metal blended for forming a cured film is 1 to 50 ppm, preferably 5 to 30 ppm, more preferably 10 to 25 ppm by weight of platinum group metal based on the total weight of components (A), (B), (C) and (D).

### [Component (F)]

Component (F) is an addition reaction inhibitor, which is optional and serves to control the catalytic activity of the platinum group metal-based catalyst. Included are organonitrogen compounds, organophosphorus compounds, acetylene compounds, oxime compounds, and organic chlorine compounds. Examples include acetylene alcohols such as 1-ethynyl-1-cyclohexanol, 3-methyl-1-butyn-3-ol, 3,5-dimethyl-1-hexyn-3-ol, 3-methyl-1-pentyn-3-ol, and 2-phenyl-3-butyn-2-ol, acetylene compounds such as 3-methyl-3-penten-1-yne and 3,5-dimethyl-3-hexen-1-yne, the reaction products of acetylene compounds with alkoxysilanes, siloxanes or hydrogensilanes, e.g., 1,1-dimethylpropynyloxytrimethylsilane, vinylsiloxanes such as cyclic tetramethylvinylsiloxane, benzotriazole, and diallyl maleate.

When used, the amount of component (F) blended is preferably 0.01 to 5 parts by weight, more preferably 0.1 to 3 parts by weight per 100 parts by weight of component (A).

### [Metal component]

In the organopolysiloxane composition, the content of metals other than the platinum group metal is up to 100 ppm by weight, preferably up to 50 ppm, more preferably up to 10 ppm, even more preferably up to 5 ppm. The metal component is intended to exclude the platinum group metal as component (E). Examples of the metal component include sodium, potassium, calcium, magnesium, iron, aluminum, copper, tin, barium, phosphorus and zinc. The quantitative determination of metals is performed by adding sulfuric acid to 2 g of the composition, heating at 900°C in an electric furnace for subjecting the sample to ashing treatment, and analyzing the ashed sample by ICP atomic emission spectroscopy analyzer. If the metal content exceeds 100 ppm, there is a risk that curing reaction does not take place with a minor amount of the platinum group metal-based catalyst. For controlling the metal content in the composition to or below 100 ppm, the raw materials selected for the composition are preferably subjected to metal removal by adsorption using filtration plates, active carbon, silica, clay, or bentonite.

### [Preparation method and optional components]

The organopolysiloxane composition of the invention is obtained by mixing predetermined amounts of components (A) to (E) and optionally component (F). Any components which are commonly blended in conventional release paper or film-forming organopolysiloxane compositions may be blended in the organopolysiloxane composition of the invention as long as the benefits of the invention are not impaired.

Optional additives include, for example, high-molecular-weight linear organopolysiloxanes for imparting lubricity, aryl group-containing silicone resins for adjusting release force, silicone resins, silica, low molecular weight organopolysiloxanes free of silicon-bonded hydrogen and alkenyl group, and the like.

The resulting organopolysiloxane composition preferably has a kinematic viscosity at 25°C of up to 500 mm²/s, more preferably 10 to 450 mm²/s, even more preferably 50 to 430 mm²/s. Too low a kinematic viscosity may lead to a smaller coating weight whereas too high a kinematic viscosity may invite a variation in coating weight and emission of a large volume of mist. The kinematic viscosity is determined by measuring an absolute viscosity by the same EMS method as above and computing on the basis of a specific gravity.

### [Application and usage]

The organopolysiloxane composition is coated onto a sheet-like substrate such as paper or plastic film by means of a coating roll and heat cured in a standard way. The sheet-like substrate having a cured silicone film of the organopolysiloxane composition disposed on one surface is advantageously used as a release sheet for release paper or film. Exemplary paper substrates include glassine paper, polyethylene-laminated paper, polyvinyl alcohol resin-coated paper and clay-coated paper. Exemplary plastic film substrates include films of polyethylene, polypropylene, and polyesters such as polyethylene terephthalate.

The coating weight of the organopolysiloxane composition may be sufficient to form a cured silicone film on the surface of a sheet-like substrate, for example, about 0.1 to 5.0 g/m². An excessive coating weight may rather invite a drop of release performance. Although the heat curing conditions vary with the type of substrate and the coating weight, a cured film can be formed on a substrate by heating at 60 to 200°C, preferably 100 to 190°C, more preferably 120 to 180°C for 1 to 30 second, preferably 1 to 60 second, more preferably 2 to 40 seconds.

### EXAMPLES

Examples and Comparative Examples are given below for further illustrating the invention although the invention is not limited thereto. It is noted that the molecular weight of component (C) is determined by Si-NMR spectroscopy. The kinematic viscosity is determined at 25°C by using a EMS viscometer (EMS-1000S by Kyoto Electronics Manufacturing Co., Ltd.) and measuring under conditions: spherical probe with a diameter 2 mm, speed 1,000 rpm, and 10 seconds. The kinematic viscosity is computed by dividing the resulting absolute viscosity (mPa·s) by a specific gravity of 0.98.

### [Raw materials used]

### Component (A)

### Methylvinylpolysiloxane (1)

### [Synthesis Example]

KOH (300 ppm) was added to 1 mole of 1,3-divinyltetramethyldisiloxane and 38.75 moles of octamethyltetrasiloxane, followed by polymerization at 150°C for 6 hours. Ethylene chlorohydrin was added in a molar amount which was 1.5 times the moles of KOH, followed by neutralization at 150°C for 3 hours. The reaction solution was vacuum concentrated under conditions: 120°C, 20 mmHg for 3 hours, combined with 5% of activated carbon Shirasagi A (Osaka Gas Chemicals Co., Ltd.), stirred for 2 hours, and filtered through a filter NA500 (Advantec Co., Ltd.).

There was obtained a polysiloxane represented by the structural formula:

{(CH₂=CH)(CH₃)₂SiO_{1/2}}₂{(CH₃)₂SiO}₁₅₅,

capped at both ends of the molecular chain with dimethylvinylsiloxy groups, consisting of (CH₃)₂SiO units except at the both ends, and having a vinyl value of 0.0166 mol/100 g and a kinematic viscosity of 440 mm²/s.

### Methylvinylpolysiloxane (2)

It had the same composition as methylvinylsiloxane (1). The addition of activated carbon after vacuum concentration was omitted, and filtration was through a filter No. 5A (Advantec Co., Ltd.).

### Component (B)

### Methylhydrogenpolysiloxane

Methylhydrogenpolysiloxane capped at both ends of the molecular chain with trimethylsiloxy groups, consisting of (CH₃)HSiO units except at the both ends, and having a Si-H content of 1.54 mol/100 g and a kinematic viscosity of 32 mm²/s

### Component (C)

· M₂D₁₇₀D^{Ac1}₂₂, molecular weight 16,526
   wherein M is R₃SiO_{1/2}, D is R₂SiO_{2/2} wherein R is methyl, D^{Ac1} is

   (CH₂=CHCOOCH₂CH₂CH₂)(CH₃)SiO_{2/2}
· M₂D₆₄D^{Ac1}₁₅, molecular weight 7,478
· D^{Ac1}₄: [(CH₂=CHCOOCH₂CH₂CH₂)(CH₃)SiO_{2/2}]₄, molecular weight 688

### Component (D)

• 1-octadecene, vinyl value 0.396 mol/100 g, melting point 18°C, flash point 159°C
• 1-tetradecene, vinyl value 0.509 mol/100 g, melting point 13°C, flash point 113°C

### Component (E)

platinum group metal-based catalyst: platinum/vinylsiloxane complex

### Component (F)

### 1-ethynyl-1-cyclohexanol

### Comparative component to (D)

· KF-96-50CS (linear dimethylpolysiloxane with viscosity 50 mm²/s),
   vinyl value 0 mol/100 g, melting point ≤-50°C, flash point ≥250°C
· 1-octene, vinyl value 0.89 mol/100 g, melting point -102°C, flash point 8°C
· 1-nonene, vinyl value 0.792 mol/100 g, melting point -81°C, flash point 26°C
· 1-heptene, vinyl value 1.02 mol/100 g, melting point -119°C, flash point -9°C
· 1-eicosene, vinyl value 0.355 mol/100 g, melting point 26-30°C, flash point 151°C

### [Example 1]

By combining 100 parts by weight of methylvinylpolysiloxane (1) as component (A) with 2.2 parts by weight of methylhydrogenpolysiloxane as component (B), 3.0 parts by weight of activated carbon-treated M₂D₁₇₀D^{Ac1}₂₂ (which was obtained by adding 1 wt% of activated carbon Shirasagi AS (Osaka Gas Chemical Co., Ltd.) based on the total weight of siloxanes, stirring for 2 hours, and passing through filter NA500) as component (C), 1.5 parts by weight of 1-octadecene as component (D), and 0.2 part by weight of 1-ethynyl-1-cyclohexanol as component (F), agitating them until uniform, adding platinum-vinylsiloxane complex as component (E) in such an amount as to give 20 ppm by weight of platinum atom based on the total weight of components (A), (B), (C), and (D), and agitating the contents until uniform, there was prepared an organopolysiloxane composition having a kinematic viscosity of 399 mm²/s and a H/Vi ratio (i.e., ratio of Si-H groups to alkenyl groups in the composition) of 1.5. The contents of metals other than the platinum group metal in the composition were sodium 0.7 ppm and potassium 1.1 ppm (total 1.8 ppm).

### [Example 2]

A composition having a kinematic viscosity of 398 mm²/s and a H/Vi of 1.5 was prepared by the same procedure as Example 1 except that the amount of component (C) was changed to 2.0 parts by weight. The contents of metals other than platinum in the composition were sodium 0.4 ppm and potassium 1.1 ppm (total 1.5 ppm).

### [Example 3]

A composition having a kinematic viscosity of 386 mm²/s and a H/Vi of 1.5 was prepared by the same procedure as Example 1 except that 2.0 parts by weight of activated carbon-treated M₂D₆₄D^{Ac1}₁₅ was used as component (C). The contents of metals other than platinum in the composition were sodium 0.5 ppm and potassium 0.8 ppm (total 1.3 ppm).

### [Example 4]

A composition having a kinematic viscosity of 382 mm²/s and a H/Vi of 1.5 was prepared by the same procedure as Example 1 except that 2.0 parts by weight of filter NA500-treated D^{Ac1}₄ was used as component (C). The contents of metals other than platinum in the composition were sodium 15 ppm and potassium 21 ppm (total 36 ppm).

### [Example 5]

By combining 100 parts by weight of methylvinylpolysiloxane (1) as component (A) with 4.7 parts by weight of methylhydrogenpolysiloxane as component (B), 0.5 part by weight of activated carbon-treated M₂D₁₇₀D^{Ac1}₂₂ as component (C), 8 parts by weight of 1-octadecene as component (D), and 0.2 part by weight of 1-ethynyl-1-cyclohexanol as component (F), agitating them until uniform, adding platinum-vinylsiloxane complex as component (E) in such an amount as to give 20 ppm by weight of platinum atom based on the total weight of components (A), (B), (C), and (D), and agitating the contents until uniform, there was prepared a composition having a kinematic viscosity of 306 mm²/s and a H/Vi of 1.5. The contents of metals other than platinum in the composition were sodium 0.4 ppm and potassium 0.7 ppm (total 1.1 ppm).

### [Example 6]

A composition having a kinematic viscosity of 392 mm²/s and a H/Vi of 1.5 was prepared by the same procedure as Example 2 except that 1.2 parts by weight of 1-tetradecene was used as component (D). The contents of metals other than platinum in the composition were sodium 0.5 ppm and potassium 0.9 ppm (total 1.4 ppm).

### [Reference Example]

By combining 100 parts by weight of methylvinylpolysiloxane (1) as component (A) with 2.2 parts by weight of methylhydrogenpolysiloxane as component (B), and 0.2 part by weight of 1-ethynyl-1-cyclohexanol as component (F), agitating them until uniform, adding platinum-vinylsiloxane complex as component (E) in such an amount as to give 100 ppm by weight of platinum atom based on the total weight of components (A) and (B), and agitating the contents until uniform, there was prepared a composition having a kinematic viscosity of 418 mm²/s and a H/Vi (i.e., ratio of Si-H groups to alkenyl groups in the composition) of 2.0. The contents of metals other than platinum in the composition were sodium 0.3 ppm and potassium 0.7 ppm (total 1.0 ppm).

### [Comparative Example 1]

By combining 100 parts by weight of methylvinylpolysiloxane (1) as component (A) with 2.2 parts by weight of methylhydrogenpolysiloxane (2) as component (B), and 0.2 part by weight of 1-ethynyl-1-cyclohexanol as component (F), agitating them until uniform, adding platinum-vinylsiloxane complex as component (E) in such an amount as to give 20 ppm by weight of platinum atom based on the total weight of components (A) and (B), and agitating the contents until uniform, there was prepared a composition having a kinematic viscosity of 418 mm²/s and a H/Vi ratio of 2.0. The contents of metals other than platinum in the composition were sodium 0.4 ppm and potassium 0.6 ppm (total 1.0 ppm).

### [Comparative Example 2]

A silicone release composition having a kinematic viscosity of 409 mm²/s and a H/Vi of 2.0 was prepared by the same procedure as Comparative Example 1 except that 2.0 parts by weight of M₂D₁₇₀D^{Ac1}₂₂ was added as component (C). The contents of metals other than platinum in the composition were sodium 0.5 ppm and potassium 0.9 ppm (total 1.4 ppm).

### [Comparative Example 3]

A silicone release composition having a kinematic viscosity of 396 mm²/s and a H/Vi of 1.5 was prepared by the same procedure as Comparative Example 1 except that 1.5 parts by weight of 1-octadecene was added as component (D). The contents of metals other than platinum in the composition were sodium 0.4 ppm and potassium 0.7 ppm (total 1.1 ppm).

### [Comparative Example 4]

A silicone release composition having a kinematic viscosity of 398 mm²/s and a H/Vi of 2.0 was prepared by the same procedure as Comparative Example 2 except that 1.5 parts by weight of KF-96-50CS (linear dimethylpolysiloxane with viscosity 50 mm²/s) was added as comparative component to (D). The contents of metals other than platinum in the composition were sodium 0.5 ppm and potassium 0.8 ppm (total 1.3 ppm).

### [Comparative Example 5]

A silicone release composition having a kinematic viscosity of 388 mm²/s and a H/Vi of 1.03 was prepared by the same procedure as Comparative Example 2 except that 1.5 parts by weight of 1-octene was added as comparative component to (D). The contents of metals other than platinum in the composition were sodium 0.5 ppm and potassium 0.9 ppm (total 1.4 ppm).

### [Comparative Example 6]

A silicone release composition having a kinematic viscosity of 388 mm²/s and a H/Vi of 1.08 was prepared by the same procedure as Comparative Example 2 except that 1.5 parts by weight of 1-nonene was added as comparative component to (D). The contents of metals other than platinum in the composition were sodium 0.6 ppm and potassium 0.8 ppm (total 1.4 ppm).

### [Comparative Example 7]

A silicone release composition having a kinematic viscosity of 387 mm²/s and a H/Vi of 1.24 was prepared by the same procedure as Comparative Example 2 except that 1.5 parts by weight of 1-heptene was added as comparative component to (D). The contents of metals other than platinum in the composition were sodium 0.5 ppm and potassium 0.9 ppm (total 1.4 ppm).

### [Comparative Example 8]

A silicone release composition having a kinematic viscosity of 391 mm²/s and a H/Vi of 1.55 was prepared by the same procedure as Comparative Example 2 except that 1.5 parts by weight of 1-eicosene was added as comparative component to (D). The contents of metals other than platinum in the composition were sodium 0.5 ppm and potassium 0.8 ppm (total 1.3 ppm).

### [Comparative Example 9]

A silicone release composition having a kinematic viscosity of 398 mm²/s and a H/Vi of 1.5 was prepared by the same procedure as Example 2 except that 100 parts by weight of methylvinylpolysiloxane (2) was used as comparative component to (A), i.e., instead of 100 parts by weight of methylvinylpolysiloxane (1). The contents of metals other than platinum in the composition were sodium 37 ppm and potassium 65 ppm (total 102 ppm).

The organopolysiloxane compositions obtained in the foregoing Examples were evaluated by the following tests. The results are also shown in Tables.

### [Release force]

The organopolysiloxane composition was coated on the metal roll of an offset transfer machine (IHI Machinery & Furnace Co., Ltd.), uniformly stretched by bringing metal and rubber rolls in contact and rotating the rolls for 45 seconds, and then transferred from the rubber roll to glassine paper ASP (Ahistrom-Munksjo). The glassine paper having the composition transferred thereto was heated in a hot air dryer at 120°C for 30 seconds, completing a release paper bearing a cured film of the composition having a thickness of 0.9-1.1 g/m². After aging at 25°C for 24 hours in this state, TESA-7475 pressure-sensitive adhesive tape (Tesa UK Ltd.) was attached to the cured film surface of the release paper (side transferred from the rubber roll), which was cut to a size of 2.5 cm by 18 cm. This test piece was sandwiched between glass plates, and aged at 25°C under a load of 70 gf/cm² and at 70°C under a load of 20 gf/cm² for 24 hours. After aging, an end portion of the test piece was detached, and the end portion of the PSA-bearing substrate of the tape was pulled back at a peeling speed of 0.3 m/min at an angle of 180° relative to the glassine paper, during which a force (N/25 mm) required for peeling was measured by a tensile tester (model AGS-50G by Shimadzu Corp.) and reported as "release force."

### [Residual adhesion rate]

The TESA-7475 tape after the measurement of release force was attached to a stainless steel plate and pressed by rolling back and forth a roller of 2 kg one cycle. The assembly was allowed to stand for 30 minutes, an end portion of the TESA-7475 tape was detached, and the end of the tape was peeled at a peeling speed of 0.3 m/min by pulling back at an angle of 180° relative to the stainless steel plate. A force (N/25 mm) required for peeling: release force "A" was measured.

As a blank, virgin TESA-7475 tape was attached to a stainless steel plate and pressed by rolling back and forth a roller of 2 kg one cycle. The assembly was allowed to stand for 30 minutes, an end portion of the TESA-7475 tape was detached, and the end of the tape was peeled at a peeling speed of 0.3 m/min by pulling back at an angle of 180° relative to the stainless steel plate. A force (N/25 mm) required for peeling: release force "B" was measured.

A residual adhesion rate (%) was determined by computing (A/B) × 100.

### [Cure]

As in the release force test, the organopolysiloxane composition was transferred from the rubber roll of the offset transfer machine to glassine paper ASP. The glassine paper having the composition transferred thereto was heated in a hot air dryer at 120°C for 30 seconds, completing a release paper bearing a cured film having a thickness of 0.9-1.1 g/m². Immediately after the release paper was taken out of the dryer, the cured film on its surface was intensely rubbed with the forefinger 10 cycles. With red marker ink applied to the film surface, the ink concentration and the cured film state were observed.

The results are evaluated according to the following rating:
· "○" when the finger mark was substantially unperceived,
· "Δ" when the finger mark looked thin, and
· "×" when the finger mark looked dense.

### [Silicone migration]

As in the release force test, a polyester film of 38 µm thick was laid on the surface of the cured film of the organopolysiloxane composition formed on the surface of glassine paper and press bonded at room temperature under a pressure of 0.98 MPa for 20 hours. Thereafter, the polyester film was detached from the cured film. Oily ink (tradename: Magic Ink by Teranishi Chemical Industry Co., Ltd.) was applied to the surface of the polyester film which had been in contact with the cured film, silicone migration was evaluated in terms of ink cissing.

The results are evaluated according to the following rating:
"O" for no ink cissing, no or little silicone migration, and
"×" for ink cissing, noticeable silicone migration.

**[Table 1]**

| Formulation (pbw) | | | Example 1 | Example 2 | Example 3 |
|---|---|---|---|---|---|
| (A) | | methylvinylpolysiloxane (1) | 100 | 100 | 100 |
| (B) | | methylhydrogenpolysiloxane | 2.2 | 2.2 | 2.2 |
| (C) | | active carbon-treated M₂D₁₇₀D^{Ac1}₂₂ | 3.0 | 2.0 | - |
| | | active carbon-treated M₂D₆₄D^{Ac1}₁₅ | - | - | 2.0 |
| (D) | | 1-octadecene | 1.5 | 1.5 | 1.5 |
| (E) | | platinum-vinylsiloxane complex | 0.8 | 0.8 | 0.8 |
| (F) | | 1-ethynyl-1-cyclohexanol | 0.2 | 0.2 | 0.2 |
| <Content of metals other than Pt in composition> ppm | | | 1.8 | 1.5 | 1.3 |
| <Concentration calculated as Pt> ppm | | | 20 | 20 | 20 |

| <Physical properties> | | | | | |
|---|---|---|---|---|---|
| | Outer appearance of coating composition (immediately after mixing) | | colorless transparent | colorless transparent | colorless transparent |
| | Outer appearance of coating composition (after 8 hours of standing) | | uniform | uniform | uniform |
| | Molar ratio of Si-H/Si-Vi | | 1.5 | 1.5 | 1.5 |
| | Kinematic viscosity (mm²/s) of silicone release composition | | 399 | 398 | 386 |

| <Release properties> | | | | | |
|---|---|---|---|---|---|
| | Release force (N/50 mm) | | 0.10 | 0.12 | 0.12 |
| | @25°C, 70 gf/cm², 24 hr | | | | |
| | Release force (N/50 mm) | | 0.21 | 0.25 | 0.23 |
| | @70°C, 20 gf/cm², 24 hr | | | | |
| | Residual adhesion rate (%) | | 98 | 98 | 98 |
| | @25°C, 70 gf/cm², 24 hr | | | | |
| | Residual adhesion rate (%) | | 99 | 97 | 98 |
| | @70°C, 20 gf/cm², 24 hr | | | | |
| | Cure | | ○ | ○ | ○ |
| | Silicone migration | | ○ | ○ | ○ |

**[Table 2]**

| Formulation (pbw) | | | Example 4 | Example 5 | Example 6 | Reference Example |
|---|---|---|---|---|---|---|
| (A) | | methylvinylpolysiloxane (1) | 100 | 100 | 100 | 100 |
| (B) | | methylhydrogenpolysiloxane | 2.2 | 4.7 | 2.2 | 2.2 |
| (C) | | active carbon-treated M₂D₁₇₀D^{Ac1}₂₂ | - | 0.5 | 2.0 | - |
| | | Filter NA500-treated D^{Ac1}₄ | 2.0 | - | - | - |
| (D) | | 1-octadecene | 1.5 | 8 | - | - |
| | | 1-tetradecene | - | - | 1.2 | - |
| (E) | | platinum-vinylsiloxane complex | 0.8 | 0.8 | 0.8 | 4.0 |
| (F) | | 1-ethynyl-1-cyclohexanol | 0.2 | 0.2 | 0.2 | 0.2 |
| <Content of metals other than Pt in composition> ppm | | | 36 | 1.1 | 1.4 | 1.0 |
| <Concentration calculated as Pt> ppm | | | 20 | 20 | 20 | 100 |

| <Physical properties> | | | | | | |
|---|---|---|---|---|---|---|
| | Outer appearance of coating composition (immediately after mixing) | | colorless transparent | colorless transparent | colorless transparent | colorless transparent |
| | Outer appearance of coating composition (after 8 hours of standing) | | uniform | uniform | uniform | uniform |
| | Molar ratio of Si-H/Si-Vi | | 1.5 | 1.5 | 1.5 | 2.0 |
| | Kinematic viscosity (mm²/s) of silicone release composition | | 382 | 306 | 392 | 418 |

| <Release properties> | | | | | | |
|---|---|---|---|---|---|---|
| | Release force (N/50 mm) | | 0.16 | 0.15 | 0.11 | 0.11 |
| | @25°C, 70 gf/cm², 24 hr | | | | | |
| | Release force (N/50 mm) | | 0.29 | 0.29 | 0.23 | 0.24 |
| | @70°C, 20 gf/cm², 24 hr | | | | | |
| | Residual adhesion rate (%) | | 95 | 98 | 99 | 98 |
| | @25°C, 70 gf/cm², 24 hr | | | | | |
| | Residual adhesion rate (%) | | 93 | 96 | 97 | 97 |
| | @70°C, 20 gf/cm², 24 hr | | | | | |
| | Cure | | ○ | ○ | ○ | ○ |
| | Silicone migration | | ○ | ○ | ○ | ○ |

**[Table 3]**

| Formulation (pbw) | | | Comparative Example 1 | Comparative Example 2 | Comparative Example 3 | Comparative Example 4 |
|---|---|---|---|---|---|---|
| (A) | | methylvinylpolysiloxane (1) | 100 | 100 | 100 | 100 |
| (B) | | methylhydrogenpolysiloxane | 2.2 | 2.2 | 2.2 | 2.2 |
| (C) | | M₂D₁₇₀D^{Ac1}₂₂ | - | 2.0 | - | 2.0 |
| (D) | | 1-octadecene | - | - | 1.5 | - |
| Comparative component to (D) | | KF-96-50CS | - | - | - | 1.5 |
| (E) | | platinum-vinylsiloxane complex | 0.8 | 0.8 | 0.8 | 0.8 |
| (F) | | 1-ethynyl-1-cyclohexanol | 0.2 | 0.2 | 0.2 | 0.2 |
| <Content of metals other than Pt in composition> ppm | | | 1.0 | 1.4 | 1.1 | 1.3 |
| <Concentration calculated as Pt> ppm | | | 20 | 20 | 20 | 20 |

| <Physical properties> | | | | | | |
|---|---|---|---|---|---|---|
| | Outer appearance of coating composition (immediately after mixing) | | colorless transparent | white cloudy | colorless transparent | white cloudy |
| | Outer appearance of coating composition (after 8 hours of standing) | | uniform | sedimented /separated | uniform | sedimented /separated |
| | Molar ratio of Si-H/Si-Vi | | 2.0 | 2.0 | 1.5 | 2.0 |
| | Kinematic viscosity (mm²/s) of silicone release composition | | 418 | 409 | 396 | 398 |

| <Release properties> | | | | | | |
|---|---|---|---|---|---|---|
| | Release force (N/50 mm) | | 0.21 | 0.14 | 0.20 | 0.15 |
| | @25°C, 70 gf/cm², 24 hr | | | | | |
| | Release force (N/50 mm) | | 0.52 | 0.28 | 0.47 | 0.32 |
| | @70°C, 20 gf/cm², 24 hr | | | | | |
| | Residual adhesion rate (%) | | 85 | 96 | 80 | 89 |
| | @25°C, 70 gf/cm², 24 hr | | | | | |
| | Residual adhesion rate (%) | | 83 | 95 | 77 | 90 |
| | @70°C, 20 gf/cm², 24 hr | | | | | |
| | Cure | | × | ○ | × | Δ |
| | Silicone migration | | × | ○ | × | × |

**[Table 4]**

| Formulation (pbw) | | | Comparative Example 5 | Comparative Example 6 |
|---|---|---|---|---|
| (A) | | methylvinylpolysiloxane (1) | 100 | 100 |
| (B) | | methylhydrogenpolysiloxane | 2.2 | 2.2 |
| (C) | | M₂D₁₇₀D^{Ac1}₂₂ | 2.0 | 2.0 |
| Comparative component to (D) | | 1-octene | 1.5 | - |
| | | 1-nonene | - | 1.5 |
| (E) | | platinum-vinylsiloxane complex | 0.8 | 0.8 |
| (F) | | 1-ethynyl-1-cyclohexanol | 0.2 | 0.2 |
| <Content of metals other than Pt in composition> ppm | | | 1.4 | 1.4 |
| <Concentration calculated as Pt> ppm | | | 20 | 20 |

| <Physical properties> | | | | |
|---|---|---|---|---|
| | Outer appearance of coating composition (immediately after mixing) | | colorless transparent | colorless transparent |
| | Outer appearance of coating composition (after 8 hours of standing) | | uniform | uniform |
| | Molar ratio of Si-H/Si-Vi | | 1.03 | 1.08 |
| | Kinematic viscosity (mm²/s) of silicone release composition | | 388 | 388 |

| <Release properties> | | | | |
|---|---|---|---|---|
| | Release force (N/50 mm) | | 0.22 | 0.20 |
| | @25°C, 70 gf/cm², 24 hr | | | |
| | Release force (N/50 mm) | | 0.69 | 0.44 |
| | @70°C, 20 gf/cm², 24 hr | | | |
| | Residual adhesion rate (%) | | 85 | 87 |
| | @25°C, 70 gf/cm², 24 hr | | | |
| | Residual adhesion rate (%) | | 82 | 85 |
| | @70°C, 20 gf/cm², 24 hr | | | |
| | Cure | | Δ | Δ |
| | Silicone migration | | × | × |

**[Table 5]**

| Formulation (pbw) | | | Comparative Example 7 | Comparative Example 8 | Comparative Example 9 |
|---|---|---|---|---|---|
| (A) | | methylvinylpolysiloxane (1) | 100 | 100 | - |
| | | methylvinylpolysiloxane (2) | - | - | 100 |
| (B) | | methylhydrogenpolysiloxane | 2.2 | 2.2 | 2.2 |
| (C) | | M₂D₁₇₀D^{Ac1}₂₂ | 2.0 | 2.0 | 2.0 |
| Comparative component to (D) | | 1-heptene | 1.5 | - | - |
| | | 1-eicosene | - | 1.5 | - |
| (D) | | 1-octadecene | - | - | 1.5 |
| (E) | | platinum-vinylsiloxane complex | 0.8 | 0.8 | 0.8 |
| (F) | | 1-ethynyl-1-cyclohexanol | 0.2 | 0.2 | 0.2 |
| <Content of metals other than Pt in composition> ppm | | | 1.4 | 1.3 | 102 |
| <Concentration calculated as Pt> ppm | | | 20 | 20 | 20 |

| <Physical properties> | | | | | |
|---|---|---|---|---|---|
| | Outer appearance of coating composition (immediately after mixing) | | colorless transparent | slightly turbid | colorless transparent |
| | Outer appearance of coating composition (after 8 hours of standing) | | uniform | sedimented /separated | uniform |
| | Molar ratio of Si-H/Si-Vi | | 0.97 | 1.55 | 1.5 |
| | Kinematic viscosity (mm²/s) of silicone release composition | | 387 | 408 | 306 |

| <Release properties> | | | | | |
|---|---|---|---|---|---|
| | Release force (N/50 mm) | | 0.31 | 0.15 | 0.28 |
| | @25°C, 70 gf/cm², 24 hr | | | | |
| | Release force (N/50 mm) | | 0.95 | 0.28 | 0.68 |
| | @70°C, 20 gf/cm², 24 hr | | | | |
| | Residual adhesion rate (%) | | 81 | 94 | 81 |
| | @25°C, 70 gf/cm², 24 hr | | | | |
| | Residual adhesion rate (%) | | 78 | 93 | 80 |
| | @70°C, 20 gf/cm², 24 hr | | | | |
| | Cure | | Δ | ○ | × |
| | Silicone migration | | × | ○ | × |

For all the compositions of Examples using both components (C) and (D) in combination, their appearance was colorless transparent, and neither separation nor sediment deposition was found after 8 hours of standing. It is believed that the coating composition for the preparation of release paper should have a bath life of at least 8 hours, preferably at least 16 hours.

All Examples marked values of release force, residual adhesion rate, curability, and silicone migration which were comparable to those of Reference Example (example obtained by adding the catalyst (E) in such an amount as to give 100 ppm of Pt based on the total weight of components (A) and (B) and fully curing). It is demonstrated that silicone has been fully cured with an amount of platinum which is as small as 20 ppm.

Comparative Example 1 wherein 0.8 part of the catalyst (20 ppm of Pt) is added to the same composition as Reference Example marks a high value of release force, a low value of residual adhesion rate, poor curability, and substantial silicone migration as compared with Reference Example and Examples, indicating insufficient cure.

Comparative Example 2 wherein component (C) is added to the composition of Comparative Example 1 marks satisfactory values of release force, residual adhesion rate, curability, and silicone migration, but the appearance of the coating composition immediately after mixing is white cloudy, and sedimentation or separation of component (C) is observed after 8 hours of standing because component (D) is omitted.

Comparative Example 3 corresponds to Example 1 from which component (C) is omitted. Its appearance is good. Because of poor curability, the release force is high, the residual adhesion rate is low, and migration increases. As a result, ink cissing is observed.

Comparative Example 4 is a composition wherein component (D) is changed to KF-96-50CS. Release properties are somewhat aggravated and its appearance is white cloudy.

Comparative Examples 5 to 7 are compositions wherein component (D) having a lower molecular weight and a vinyl value of at least 0.58 mol/100 g is added so that the compositions have a H/Vi ratio which is 1.4 or lower. The extremely low H/Vi ratio indicates poor curability so that the release force is a little higher, the residual adhesion rate is a little lower, and curability and silicone migration are aggravated.

Comparative Example 8 is a composition wherein 1-eicosene is used as component (D). Since 1-eicosene solidifies and loses the compatibilizer effect at room temperature, the appearance turns slightly turbid. After the coating composition was allowed to stand for 8 hours, sedimentation or separation of component (C) was observed.

Comparative Example 9 has the same composition as Example 1, but the metal content thereof is more than 100 ppm. The composition has a high release force and a low residual adhesion rate, indicating poor curability.

It is evident from the above results that silicone compositions within the scope of the invention are curable with a minor amount of platinum.

## Claims

1. An addition reaction curable organopolysiloxane composition comprising the following components (A) to (E):
(A) 100 parts by weight of an organopolysiloxane having on the average at least two silicon-bonded alkenyl groups per molecule,
(B) an organohydrogenpolysiloxane having on the average at least two silicon-bonded hydrogen atoms (or Si-H groups) per molecule, in an amount to give 1 to 5 moles of Si-H groups per mole of alkenyl groups in component (A),
(C) 0.01 to 10 parts by weight of an organopolysiloxane having on the average at least one (meth)acryloyl group per molecule, exclusive of the organopolysiloxane (A),
(D) 0.1 to 20 parts by weight of a linear olefin having a melting point of up to 20°C and a flash point of at least 40°C, and
(E) a platinum group metal-based catalyst in an amount to give 1 to 50 ppm by weight of platinum group metal based on the total weight of components (A), (B), (C) and (D),
the content of metals other than the platinum group metal being up to 100 ppm in the composition.

2. The addition reaction curable organopolysiloxane composition of claim 1, further comprising (F) an addition reaction inhibitor in an amount of 0.01 to 5 parts by weight per 100 parts by weight of component (A).

3. The addition reaction curable organopolysiloxane composition of claim 1 or 2 wherein component (C) has a weight average molecular weight of 516 to 100,000.

4. The addition reaction curable organopolysiloxane composition of any one of claims 1 to 3 wherein component (C) is an organopolysiloxane having a (meth)acryloyl group on its side chain.

5. The addition reaction curable organopolysiloxane composition of any one of claims 1 to 4 wherein component (C) is a cyclic siloxane having a (meth)acryloyl group.

6. The addition reaction curable organopolysiloxane composition of any one of claims 1 to 5 wherein component (C) is an organopolysiloxane having at least three (meth)acryloyl groups per molecule.

7. The addition reaction curable organopolysiloxane composition of any one of claims 1 to 6 wherein component (D) is a linear olefin having a vinyl value (i.e., moles of unsaturated functional group in 100 g) of 0.30 to 0.58 mol/100 g, a melting point of up to 20°C, and a flash point of at least 70°C, and containing at least one unsaturated functional group at an end of its molecule.

8. The addition reaction curable organopolysiloxane composition of any one of claims 1 to 7, for use in release paper or release film.
